# EUROPÄISCHE PATENTANMELDUNG

(11) **EP 0 656 548 A2**
(43) Veröffentlichungstag der Anmeldung: **07.06.1995**
(21) Anmeldenummer: 94118332.9
(22) Anmeldetag: 22.11.1994
(51) Int. Cl.: G02B 1/04, G02B 5/02

(54) **Gleichmässig ausgeleuchtete Lichtleiterplatten**

(30) Priorität: 01.12.1993 DE 9318362 U
(71) Anmelder: Röhm GmbH, D-64293 Darmstadt (DE); DR. ING. WILLING GMBH, D-96110 Schesslitz (DE)
(72) Erfinder: Fischer, Udo, Dr. Ing., D-64297 Darmstadt (DE); Willing, Achim, Dr. Ing., D-96110 Schesslitz-Burgellern (DE)

(57) **Zusammenfassung**

Die Erfindung umfaßt kantenbeleuchtete Lichtleiterelemente, bestehend aus einem Matrixkunststoff A und darin homogen verteilten Streupartikeln aus einem vernetzten Polymerisat B. Kennzeichnend für die Erfindung ist, daß der Matrixkunststoff A mit dem Polymerisat unverträglich ist, daß der Matrixkunststoff A hochtransparent ist, daß der Anteil der Streupartikel 0,01 bis 1 Gew.-% bezogen auf A beträgt, daß die Brechzahl n_{D}(B) des Polymerisats B um mindestens 0,01 Einheiten über der Brechzahl n_{D}(A) des Matrixkunststoffs A liegt, sowie daß das Polymerisat B vorzugsweise aus Comonomeren mit aromatischen Substituenten aufgebaut ist.

## Beschreibung

### Gebiet der Erfindung

Die Erfindung betrifft gleichmäßig ausgeleuchtete Lichtleiterplatten, die von der Kante her beleuchtet werden, aufgebaut aus einem Matrixkunststoff A mit hoher, nicht wellenlängen-selektiver Transmission, vorzugsweise im Bereich des sichtbaren Lichts, und darin eingelagerten transparenten Partikeln aus einem vernetzten Polymerisat B mit einer Brechzahl n_{D}(B), die um mindestens 0,02 Einheiten höher liegt als die Brechzahl n_{D}(A) des Polymerisats A.

### Stand der Technik

Der Stand der Technik kennt verschiedenste Methoden, um zu gleichmäßig ausgeleuchteten Lichtleiterplatten zu kommen. EP-A 533 301 beschreibt beispielsweise scheibenförmige Lichtverteilungskörper aus nichtstreuendem und transparentem Material, wobei die Abstrahlfläche und/oder die dieser entgegengesetzte Fläche ganzflächig oder teilflächig eine zumindest teilweise reflektierende, die Totalreflexion unterbrechende Beschichtung, Kaschierung, Aufrauhung oder Struktur zur Verbesserung der Lichtverteilung im Lichtverteilungskörper aufweist.
EP-PS 371 073 umfaßt eine Vorrichtung, bestehend aus einer Lichtleiterplatte, in der Licht, ausgehend von einer Lichtquelle, mit Komponenten parallel zu den großen Plattenflächen geführt wird und aus Erhebungen auf einer Plattenfläche austritt, dadurch gekennzeichnet, daß die glatte Plattenfläche mit einer durchgehenden, durchsichtigen Zwischenschicht überzogen ist, die auf einer ihrer Seiten die Erhebungen aufweist, wobei letztere dicht an dicht und in Höhe und Breite im Bereich zwischen 1 und 500 µm liegen.
In DE-Gbm 93 00 991 werden plattenförmige Lichtleiterplatten beschrieben, deren lichtaufnehmender Bereich von einem senkrecht zur Plattenebene verlaufenden Umfangsbereich gebildet ist und in deren Oberfläche an mindestens einer Stelle Ausnehmungen und/oder Aufrauhungen und/oder Auftragungen vorgesehen sind, deren der Umgebung zugekehrte Flächen den lichtabgebenden Bereich bilden, während sämtliche anderen Materialbereiche lichtleitend ausgebildet sind. Die DE-Gbm 89 13 036 beinhaltet Lichtleiterplatten, in die über eine glatte Randfläche Licht einer Lichtquelle eingekoppelt wird, das die Lichtleiterplatte unsichtbar durchflutet und im Bereich von rauhen Ornamentflächen der Lichtleiterplatte durch Lichtbrechung sichtbar wird, dadurch gekennzeichnet, daß die glatte, das Licht einkoppelnde Randfläche als sich in die Lichtleiterplatte hinein erstreckende Randausnehmung ausgebildet ist und daß auf die einkoppelnde Randfläche dieser Randausnehmung das Licht der Lichtquelle gerichtet ist.
Neben diesen Techniken zur Ausleuchtung von Lichtleiterplatten, die sich auf die Manipulation der Oberflächen der Lichtleiterplatten konzentrieren, bietet der Stand der Technik noch weitere Möglichkeiten zur Bereitstellung ausgeleuchteter Lichtleiterplatten, beispielsweise durch Einlagerung von Streupartikeln in der Lichtleiterplatten-Matrix.
So beschreibt beispielsweise EP-A 269 324 eine spezielle Zusammensetzung, die zur Einarbeitung in thermoplastische Polymerisate geeignet ist und die Kern-Schale-Polymerisatteilchen mit Durchmessern zwischen 2 und 15 µm beinhaltet. Der Kern des Kern-Schale-Polymerisats besteht aus vernetztem Alkylacrylatpolymerisat und besitzt einen Brechungsindex, der maximal um 0,2 Einheiten von demjenigen des Matrixpolymerisats abweicht. Die Schale des Kern-Schale-Polymerisats ist mit dem Matrixpolymerisat verträglich, nicht vernetzt und macht 5 bis 40 Gew.-% vom Teilchengewicht aus. In EP-A 342 283 werden ebenfalls Teilchen mit Durchmessern zwischen 2 und 15 µm in lichtstreuenden thermoplastischen Polymerisatzusammensetzungen beschrieben, wobei der Anteil der Teilchen bei 0,1 bis 10 Gew.-% bezogen auf die Polymerisatzusammensetzungen liegt, und Kern-Schale-Poylmerisatteilchen gemäß EP-A 269 324 per Disclaimer ausgeschlossen werden.
EP-A 497 502 beschreibt mehrschichtige Lichtleiterplatten, die eine transluzente Platte mit mehr als 80 % Lichttransmission umfassen, wobei die transluzente Platte in Anteilen von 0,1 bis 40 Gew.-%, bezogen auf das thermoplastische Matrixpolymerisat der Platte, an Polymerisatteilchen mit Teilchendurchmessern zwischen 2 und 15 µm umfaßt. Die Lichtquelle, deren Licht diffus gestreut wird, ist hinter der Hauptfläche der Lichtleiterplatten angebracht.

### Aufgabe und Lösung

Setzt man die in EP-A 342 283 oder EP-A 259 324 beschriebenen Streuteilchen in kantenbeleuchteten Lichtleiterelementen ein, so ist es aufgrund der hohen Streuwirkung der Teilchen unmöglich, eine gleichmäßige Ausleuchtung des Lichtleiterelements zu erhalten. Gemäß EP-A 342 283 (Beispiel 9) reduzieren schon 2,5 Gew.-% Polymerpartikel die Lichttransmission von PMMA erheblich und verursachen eine starke Trübung.
Demgegenüber ist man bestrebt, Lichtleiterelemente bereitzustellen, die einerseits von der Kante her beleuchtet werden können und andererseits keiner aufwendigen Oberflächenstrukturierung bedürfen.
Überraschenderweise wurde gefunden, daß die daraus resultierende Aufgabe zur Bereitstellung von kantenbeleuchteten Lichtleiterelementen mit einer gleichmäßigen Ausleuchtung durch die Einlagerung von Streupartikeln einer ganz bestimmten Konfiguration in die Lichtleitermatrix gelöst werden kann.

Die Streupartikel, bestehend aus einem vernetzten Polymerisat B, sind in Anteilen von 0,01 bis 1 Gew.-%, vorzugsweise 0,02 bis 0,5 Gew.-%, besonders vorzugsweise 0,05 bis 0,2 Gew.-%, bezogen auf den Matrixkunststoff A im Lichtleiterelement anwesend und weisen Brechzahlen n_{D}(B) auf, die um mindestens 0,01, vorzugsweise mindestens 0,02 Einheiten über den Brechzahlen n_{D}(A) des Matrixkunststoffs A liegen. Das vernetzte Polymerisat B ist mit dem Matrixkunststoff A unverträglich, wobei die aus Polymerisat B bestehenden Streupartikel im Matrixkunststoff A ausgeprägte Phasengrenzflächen an der Oberfläche der Streupartikel ausbilden. Im allgemeinen ist das vernetzte Polymerisat B aufgebaut aus:
b1) 0 bis 60 Gew.-Teilen eines Acryl- und/oder Methacrylsäureesters mit 1 bis 12 C-Atomen im aliphatischen Esterrest,
b2) 25 bis 99 Gew.-Teilen von Comonomeren, die aromatische Gruppen als Substituenten aufweisen und die mit den Monomeren b1) copolymerisierbar sind, sowie
b3) 1 bis 15 Gew.-Teilen von vernetzenden Comonomeren, die mindestens zwei ethylenisch ungesättigte, radikalisch mit b1) und b2) copolymerisierbare Gruppen aufweisen,
wobei die Summe der Gruppen b1), b2) und b3) 100 Gew.-Teile ausmacht.
Der Matrixkunststoff A ist ein hochtransparentes Polymerisat mit einem spektralen dekadischen Absorptionsmaß nach DIN 1349 von maximal 0,035, wobei der Matrixkunststoff A ein thermoplastischer Kunststoff oder bevorzugt ein gehärtetes Gießharz sein kann. Besonders bevorzugt enthält der Matrixkunststoff A zu mindestens 50 Gew-% (bezogen auf A) Methacrylsäureester-Einheiten; ganz besonders bevorzugt enthält A zu mindestens 50 Gew.-% Methylmethacrylat.

### Durchführung der Erfindung

### Der Matrixkunststoff A

Zwingende Bedingung für den Matrixkunststoff A, der aus einem hochtransparenten Polymerisat besteht, ist, daß das Polymerisat ein spektrales dekadisches Absorptionsmaß nach DIN 1349 von maximal 0,035 aufweist. Bevorzugt werden Matrixkunststoffe A eingesetzt, die mindestens 50 Gew.-% Methacrylsäureester-Einheiten bezogen auf A enthalten. Ganz besonders bevorzugt enthalten die Matrixkunststoffe A mindestens 50 Gew.-% Methylmethacrylat-Einheiten. Als Comonomere für die Methacrylsäureester können mit diesen radikalisch copolymerisierbare, ethylenisch ungesättigte Monomere fungieren, wie beispielsweise Ester der Acrylsäure, Acryl- oder Methacrylnitril, Vinylester von Carbonsäuren, wie Vinylacetat, Amide der Acryl- oder der Methacrylsäure sowie Olefine.
Die Herstellung thermoplastischer Matrixkunststoffe A ist bekannt. So wird die Herstellung der bevorzugten Polymethacrylat-Kunststoffe A als thermoplastische Formmassen in der Literatur ausführlich beschrieben (vgl. beispielsweise Vieweg, Esser Kunststoff-Handbuch, Band IX, Polymethacrylate, Seiten 22 bis 42, Carl Hanser Verlag München, 1975). Die Streuteilchen aus dem vernetzten Polymerisat B werden mittels bekannter thermoplastischer Mischtechniken, wie beispielsweise Schmelzemischen im Extruder oder im Mischkneter, in den thermoplastischen Matrixkunststoff A eingebracht, wobei die Streuteilchen nach dem Mischvorgang möglichst homogen verteilt sind.
Bevorzugt sind die Matrixkunststoffe A gehärtete Gießharze, besonders bevorzugt gehärtete Polymethacrylat-Gießharze, deren Herstellung beispielsweise in Vieweg-Esser, Kunststoff-Handbuch, Band IX, Polymethacrylate, Seiten 15 bis 21 und 43 bis 56, Carl Hanser Verlag, München, 1975, beschrieben wird. Vorzugsweise werden die Gießformen in Form und Abmessung nach der gewünschten Form der Lichtleiterelemente gewählt, wobei als Formen besonders bevorzugt Platten und Rundstäbe infrage kommen. Ein Verfahren zur Herstellung von Lichtleiterelementen aus Gießharzen A mit eingelagerten Streupartikeln aus Polymerisat B kann beispielsweise folgendermaßen gestaltet sein: eine Vorlösung aus 80 bis 100 Gew.-Teilen Methacrylat-Monomeren und 0 bis 20 Gew.-Teilen Polymethacrylat-Präpolymerisat wird mit 0 bis 1 Gew.-Teilen, gegebenenfalls 0,05 bis 0,3 Gew.-Teilen eines vernetzenden Monomeren mit mindestens zwei ethylenisch ungesättigten, radikalisch polymerisierbaren Gruppen, sowie 0,01 bis 1 Gew.-Teilen Streupartikeln aus Polymerisat B homogen vermischt. Dieser Vorlösung werden an sich übliche Polymerisationsinitiatoren zugestzt, die Mischung in eine Polymerisationskammer gefüllt und vorzugsweise im Wasserbad und/oder im Luftschrank polymerisiert.

### Die Streupartikel aus Polymerisat B

Das die Streupartikel aufbauende vernetzte Polymerisat B weist eine Brechzahl n_{D}(B) auf, die um 0,01, vorzugsweise um 0,02 Einheiten über der Brechzahl n_{D}(A) des Matrixkunststoffs A liegt. Der Anteil der Streupartikel in den Lichtleiterelementen liegt bei 0,01 bis 1 Gew.-% bezogen auf den Matrixkunststoff A, bevorzugt bei 0,02 bis 0,5 Gew.-%, besonders bevorzugt bei 0,05 bis 0,2 Gew.-%. Im allgemeinen ist das vernetzte Polymerisat B aufgebaut aus:
b1) 0 bis 60 Gew.-Teilen eines Acryl- und/oder Methacrylsäureesters mit 1 bis 12 C-Atomen im aliphatischen Esterrest, wobei beispielhaft genannt seien: Methyl(meth)acrylat, Ethyl(meth)acrylat, n-Propyl(meth)acrylat, i-Propyl(meth)acrylat, n-Butyl(meth)acrylat, i-Butyl(meth)acrylat, tert.Butyl(meth)acrylat, Cyclohexyl(meth)acrylat, 3,3,5-Trimethylcyclohexyl(meth)acrylat, 2-Ethylhexyl(meth)acrylat, Norbornyl(meth)acrylat oder Isobornyl(meth)acrylat;
b2) 25 bis 99 Gew.-Teilen von Comonomeren, die aromatische Gruppen als Substituenten aufweisen und die mit den Monomeren b1) copolymerisierbar sind, wie beispielsweise Styrol,α-Methylstyrol, ringsubstituierte Styrole, Phenyl(meth)acrylat, Benzyl(meth)acrylat, 2-Phenylethyl(meth)acrylat, 3-Phenylpropyl(meth)acrylat oder Vinylbenzoat; sowie
b3) 1 bis 15 Gew.-Teilen vernetzenden Comonomeren, die mindestens zwei ethylenisch ungesättigte, radikalisch mit b1) und b2) copolymerisierbare Gruppen aufweisen, wie beispielsweise Divinylbenzol, Glykoldi(meth)acrylat, 1,4-Butandioldi(meth)acrylat, Allyl(meth)acrylat, Triallylcyanurat, Diallylphthalat, Diallylsuccinat, Pentaerythrittetra(meth)acrylat oder Trimethylolpropantri(meth)acrylat,
wobei sich die Comonomeren b1), b2) und b3) zu 100 Gew.-Teilen ergänzen.
Der mittlere Teilchendurchmesser der aus dem vernetzten Polymerisat B aufgebauten Streupartikel liegt zwischen 2 und 20 µm, vorzugsweise zwischen 3 und 10 µm, wobei mindestens 80 Gew.-% der Streupartikel bezogen auf die Gesamtheit der Streupartikel eine maximale Abweichung des Teilchendurchmessers vom mittleren Teilchendurchmesser von ± 20 % aufweisen.

Bevorzugt werden die Streupartikel durch Emulsionspolymerisation hergestellt, wie beispielsweise in EP-A 342 283 oder EP-A 269 324 beschrieben, ganz besonders bevorzugt durch Polymerisation in organischer Phase, wie beispielsweise in der deutschen Patentanmeldung P 43 27 464.1 beschrieben, wobei bei der letztgenannten Polymerisationstechnik besonders enge Teilchengrößen-verteilungen oder anders ausgedrückt besonders geringe Abweichungen der Teilchendurchmesser vom mittleren Teilchendurchmesser auftreten.
Das die Streupartikel aufbauende Polymerisat B ist unabhängig vom Vernetzungsgrad mit dem Matrixkunststoff A unverträglich, wobei die eingelagerten Streupartikel in der Kunststoffmatrix aus A deutlich ausgeprägte Phasengrenzflächen ausbilden, an denen das Licht mit minimalen Verlusten gestreut wird. Vorzugsweise wird diese Ausprägung der Phasengrenzflächen durch Anteile der vernetzenden Monomeren b3) im Polymerisat B von über 2 Gew.-Teilen, besonders vorzugsweise von über 4 Gew.-Teilen bezogen auf die eingesetzten Monomeren erreicht.

### Die Lichtleiterelemente

Die Lichtleiterelemente bestehen aus dem Matrixkunststoff A und den darin eingelagerten, homogen verteilten Streupartikeln aus Polymerisat B. Die Beleuchtung der Lichtleiterelemente erfolgt an den Kantenflächen der Lichtleiterelemente. Das kantenbeleuchtete Lichtleiterelement, das beispielsweise die Form einer Platte oder eines Rundstabs aufweisen kann, strahlt das Licht flächig senktrecht zu der Kante, an der die Beleuchtungsquelle angebracht ist, ab. Die Ausleuchtung der Flächen der erfindungsgemäßen Lichtleitelemente ist von hoher Gleichmäßigkeit, wobei durch die deutlich ausgeprägten Phasengrenzflächen der Streupartikel, die durch die Unverträglichkeit zwischen den Polymerisaten A und B bedingt sind, ein sehr geringer Verlust der Intensität des eingestrahlten Lichts auftritt. Weiterhin treten durch den speziellen Aufbau der Streupartikel bedingt, keine spektralen Intensitätsverluste bei der Lichtstreuung auf, wie sie oftmals bei Streupartikeln des Standes der Technik, bedingt durch lichtabsorbierende Eigenschaften der Streupartikel bei bestimmten Wellenlängen oder ganz besonders durch wenig ausgeprägte Phasengrenzflächen zwischen den Streupartikeln und dem Matrixkunststoff, auftreten.
Die erfindungsgemäßen Lichtleiterelemente werden mittels Lichtquellen, die vorzugsweise in Rahmenelementen, die die Lichtleiterelemente umschließen, integriert sind, von der Kante her beleuchtet. Sind die Lichtleiterelemente von plattenförmiger Geometrie, so ist die Lichtquelle vorzugsweise ein Leuchtkörper von röhrenförmiger Gestalt, während bei rundstabförmigen Lichtleiterelementen die Lichtquelle vorzugsweise punktförmig gestaltet ist. Als Lichtquellen werden an sich übliche Leuchtkörper, wie beispielsweise Glühbirnen oder Leuchtstoffröhren, verwendet.
In einer weiteren bevorzugten Ausführungsform der Erfindung sind die nicht beleuchteten Kanten der Lichtleiterelemente mit dünnen Schichten belegt, die das an der Kante ankommende Streulicht in das Lichtleiterelement zurückreflektieren.
Solche reflektierenden Schichten können beispielsweise durch gerichtet oder gestreut reflektierende Klebefolien oder durch Lackieren von Formulierungen mit reflektierenden Pigmenten aufgebracht werden.

Weiterhin bevorzugte plattenförmige Lichtleiterelemente umfassen eine in der Aufsicht hinter dem Lichtleiterelement angebrachte diffus streuende Scheibe, die das in der Betrachtungsrichtung nach hinten abgestrahlte Licht gleichmäßig reflektiert und damit die nach vorne abgestrahlte Lichtintensität erhöht, ohne die gleichmäßige Flächenausleuchtung zu beeinträchtigen.

Ein besonders bevorzugter Aufbau mit den erfindungsgemäßen Lichtleiterelementen umfaßt einen hinter der oben beschriebenen Lichtleiterplatte befindlichen Reflektor sowie eine lichtstreuende Informationsträgerplatte, die ihrerseits eine geringe Lichttransmission und gleichzeitig eine hohe Reflexion auf der der Lichtleiterplatte zugewandten Oberfläche aufweist.
Weiterhin kann die Lichtleiterplatte beidseitig mit oben beschriebenen Informationsträgerplatten versehen werden.

Die folgenden Beispiele sollen die Erfindung erläutern

### BEISPIELE

### Beispiel 1

### Herstellung der Streupartikel aus Polymerisat B

In einem 500 ml-Reaktor ausgestattet mit Kühler, Stickstoff-Einleitung, Temperaturfühler, Thermostat und Rührer werden:
136,5 g Cyclohexan
34,5 g Methylmethacrylat
25,1 g Benzylmethacrylat
3,1 g Allylmethacrylat
0,8 g Styrol-Isopren-Blockcopolymerisat hydriert, (Shellvis® 50)
vorgelegt.
Durch Zugabe einer Lösung von 0,63 g Bis(4-tert.-Butylcyclohexyl)peroxodicarbonat und 0,06 g t-Butyl-per-2-ethylhexanoat in 6,2 g Cyclohexan wird die Polymerisation gestartet. Nach 75 Minuten wird die Innentemperatur auf 75 Grad C erhöht und 2 Stunden bei dieser Temperatur gerührt. Zur Nachreaktion werden 0,06 g t-Butylperneodecanoat in 0,54 g Cyclohexan zugefügt, eine weitere Stunde bei 75 Grad C gerührt und danach abgekühlt. Man erhält eine koagulatfreie Dispersion. Die Dispersion enthält < 2 Gew.-% sehr feine Teilchen; mehr als 98 Gew.-% der Teilchen weisen einen Durchmesser von 7 µm auf, wobei die Oberfläche der Teilchen rauh ist. Die Teilchen werden abfiltriert und im Vakuum getrocknet.

### Beispiel 2

### Herstellung einer Lichtleiterplatte enthaltend Streupartikel aus Polymerisat B gemäß Beispiel 1

Zur Herstellung einer Lichtleiterplatte werden 1 Gew.-Teil Streupartikel gemäß Beispiel 1 mit 30 Gew.-Teilen Methylmethacrylat in einem schnellaufenden Intensivrührer nach dem Rotor-Stator-Prinzip gemischt und anschließend einer Mischung aus 968 Gew.-Teilen Polymethylmethacrylat-Präpolymerisat mit einer Viskosität von 1000 mPa s (Rotationsviskosimeter nach DIN 53019) und 1 Gew.-Teil 2,2'-Azobis-(2,4-dimethylvateronitril) zugesetzt. Der Ansatz wird intensiv gerührt, in eine Polymerisationskammer aus Silikatglas, die auf 8 mm distanziert ist, gefüllt und 30 Stunden bei 25 Grad C im Wasserbad polymerisiert. Zur Endpolymerisation wird im Temperschrank 12 Stunden bei 120 Grad C nachpolymerisiert. Nach dem Abkühlen und Entformen wird eine farblose Lichleiterplatte mit schwacher Trübung erhalten.

### Beispiel 3

### Eigenschaften der kantenbeleuchteten Lichtleiterplatte

Eine gemäß Beispiel 2 hergestellte Lichtleiterplatte der Maße 500 x 500 x 8 mm wird von einer Kante her mit einer Leuchtstoffröhre von 200 mm Länge, von 7 mm Querschnitt und einer Leistung von 11 Watt beleuchtet.
Das Verhältnis der maximalen Leuchtdichte MALD des senkrecht zur Plattenoberfläche abgegebenen Lichts, die im Abstand von 50 mm zu der Leuchtstoffröhre bestimmt wird zur minimalen Leuchtdichte MILD, die im Abstand von 450 mm zur Leuchtstoffröhre bestimmt wird, beträgt MALD: MILD ≦ 2 : 1.

## Patentansprüche

1. Kantenbeleuchtete Lichtleiterelemente, bestehend aus einem Matrixkunststoff A und darin homogen verteilten Streupartikeln aus einem Polymerisat B,
dadurch gekennzeichnet,
daß der Matrixkunststoff A mit dem Polymerisat B unverträglich ist, daß der Matrixkunststoff A ein spektrales dekadisches Absorptionsmaß nach DIN 1349 von maximal 0,035 aufweist, daß der Anteil der Streupartikel bestehend aus Polymerisat B 0,01 bis 1 Gew.-% bezogen auf den Matrixkunststoff A beträgt, daß die Brechzahl n_{D}(B) des Polymerisats B um mindestens 0,01 Einheiten über der Brechzahl n_{D}(A) des Matrixkunststoffs A liegt, sowie daß das Polymerisat B aufgebaut ist aus:
(b1) 0 bis 60 Gew.-Teilen eines Acryl- und/oder Methacrylsäureesters mit 1 bis 12 C-Atomen im aliphatischen Esterrest,
(b2) 25 bis 99 Gew.-Teilen von Comonomeren, die aromatische Substituenten aufweisen und die mit den Monomeren b1) copolymerisierbar sind, sowie
(b3) 1 bis 15 Gew.-Teilen von vernetzenden Comonomeren, die mindestens zwei ethylenisch ungesättigte, radikalisch mit b1) und b2) copolymerisierbare Gruppen aufweisen,
wobei die Summe der Comonomeren b1), b2) und b3) 100 Gew.-Teile ausmacht.

2. Kantenbeleuchtete Lichleiterelemente gemäß Anspruch 1, dadurch gekennzeichnet, daß der Matrixkunststoff A zu mindestens 50 Gew.-% aus Methacrylsäureester-Einheiten aufgebaut ist.

3. Kantenbeleuchtete Lichtleiterelemente gemäß den Ansprüchen 1 und 2, dadurch gekennzeichnet, daß die Brechzahl n_{D}(B) des Polymerisats B um 0,02 Einheiten über der Brechzahl n_{D}(A) des Matrixkunststoffs A liegt.

4. Kantenbeleuchtete Lichtleiterelemente gemäß den Ansprüchen 1 bis 3, dadurch gekennzeichnet, daß der Anteil der Streupartikel aus Polymerisat B 0,02 bis 0,5 Gew.-% bezogen auf den Matrixkunststoff A beträgt.

5. Kantenbeleuchtete Lichtleiterelemente gemäß den Ansprüchen 1 bis 4, dadurch gekennzeichnet, daß der Matrixkunststoff A ein gehärtetes Gießharz ist.

6. Kantenbeleuchtete Lichtleiterelemente gemäß den Ansprüchen 1 bis 5, dadurch gekennzeichnet, daß die Beleuchtung der Lichtleiterelemente von einer bestimmten Kante her erfolgt.

7. Kantenbeleuchtete Lichtleiterelemente gemäß den Ansprüchen 1 bis 6, dadurch gekennzeichnet, daß die nicht beleuchteten Kanten der Lichtleiterelemente mit reflektierenden Schichten belegt sind, die das an den Kanten austretende Licht in die Lichtleiterelemente zurückreflektieren.

8. Kantenbeleuchtete Lichtleiterelemente gemäß den Ansprüchen 1 bis 7, dadurch gekennzeichnet, daß die Lichtleiterelemente plattenförmig sind.

9. Kantenbeleuchtete Lichtleiterelemente gemäß Anspruch 8, dadurch gekennzeichnet, daß hinter dem plattenförmigen Lichtleiterelement eine diffus streuende Scheibe angebracht ist, die das nach hinten abgestrahlte Licht in das Lichtleiterelement zurückreflektiert.

10. Kantenbeleuchtete Lichtleiterelemente gemäß den Ansprüchen 8 und 9, dadurch gekennzeichnet, daß die plattenförmigen Lichtleiterelemente durch Rahmenelemente umschlossen sind, in welchen die Beleuchtungselemente integriert sind.

11. Kantenbeleuchtete Leichleiterelemente gemäß den Ansprüchen 8 bis 10, dadurch gekennzeichnet, daß vor der Lichtleiterplatte ein lichtstreuender Informationsträger aufgebracht ist.

12. Kantenbeleuchtete Lichtleiterelemente gemäß Anspruch 8, dadurch gekennzeichnet, daß vor und hinter der Lichtleiterplatte ein lichtstreuender Informationsträger angebracht ist.
